# EUROPEAN PATENT APPLICATION

(11) **EP 2 208 695 A1**
(43) Date of publication of application: **21.07.2010**
(21) Application number: 09000542.2
(22) Date of filing: 16.01.2009
(51) Int. Cl.: B65G 57/24, B65G 57/06

(54) **Palletizer machine and method of palletizing**

(71) Applicant: Elettric 80 S.p.A., 42030 Viano, Reggio Emilia (IT)
(72) Inventor: Cavirani, Vittorio, 42030 Viano (RE) (IT)
(74) Representative: Fuochi, Riccardo

(57) **Abstract**

A palletizer machine and a method of palletizing layers (2), one on top of the other, of packs (1) fed from a infeed transfer line (3) comprising a transfer unit (G1) for transferring single packs (1) arriving from the line (3) to a first operating position (P1), a forming unit (G2) for feeding single packs (1) from the position (P1) to a predefined position (P2) and the forming of layers (2) of packs (1) on a loading platform(5); a loading unit (G3) for transferring a layer (2) formed on a loading platform (5) to a pick-up station (6), and means (4) for picking up the layer (2) from the pick-up station and forming a palletized load (7) of layers (2) one on top of the other.

## Description

The present invention relates to a palletizer machine and in particular to a palletizer machine for the beverage sector, that is, equipment for palletizing groups of bottles or containers.

Known technology for this purpose has for some time included machines based on the transfer on conveyor belts of successive groups of bottles or containers hereinafter referred to as 'packs'.

In systems of the known type, the packs are made to travel along feed lines and are carried to ordering devices which form rows of packs.

The rows formed in this way are positioned and aligned by pushers so as to form pack layers which are then placed one on top of the other to form the palletized load ready for wrapping or capping.

One drawback of known systems is the need to transfer and to partially and dynamically manipulate the packs. Transfer causes friction and rubbing and manipulation can cause jamming of the packs during transfer. This damages the product before it is palletized. and prevents the formation of a correct load geometry.

This means that the packs have to be forced into the final configuration specified for the layer and this can modify in an unwanted way the geometry of the layer, or even more seriously, alters the overall shape of the layer being formed.

The aim of the present invention is to overcome the drawbacks of known solutions and to provide a compact-size, high-speed palletizer machine.

A second aim of the present invention is to provide a high-productivity method of palletizing which enables constant dynamic handling, that is, pre-forming of the packs with positive action thereby eliminating the risk of damage.

A further aim of the present invention is to provide a method of palletizing which enables inspection of the equipment even during the operating cycle.

Another aim of the present invention is to provide a method of palletizing which enables operator interventions and cycle resetting in any cycle step without having to zero set the cycle and eject all the product from the area.

These aims are achieved by a palletizer machine and a method of palletizing according to the main claims below.

A first advantage of the invention is that the compact, fast equipment proposed eliminates those drawbacks of the background art relating to the pack damage caused by rotating the packs and at the same time guarantees high productivity rates.

These and further advantages will be more clearly understood by a technical expert in this field from the description which follows and from the appended drawings provided merely by way of example without restricting the scope of the inventive concept and in which:
Fig. 1 shows a side view of a palletizer machine according to the present invention.
Figures 2a, 2b and 2c show respectively a side view, a front view and a plan view of a transfer unit of a palletizer machine according to the present invention.
Figures 3a, 3b and 3c show respectively a side view, a front view and a plan view of a forming unit of a palletizer machine according to the present invention.
Figures 4a and 4b show respectively a side view and a front view of a loading unit of a palletizer machine according to the present invention.

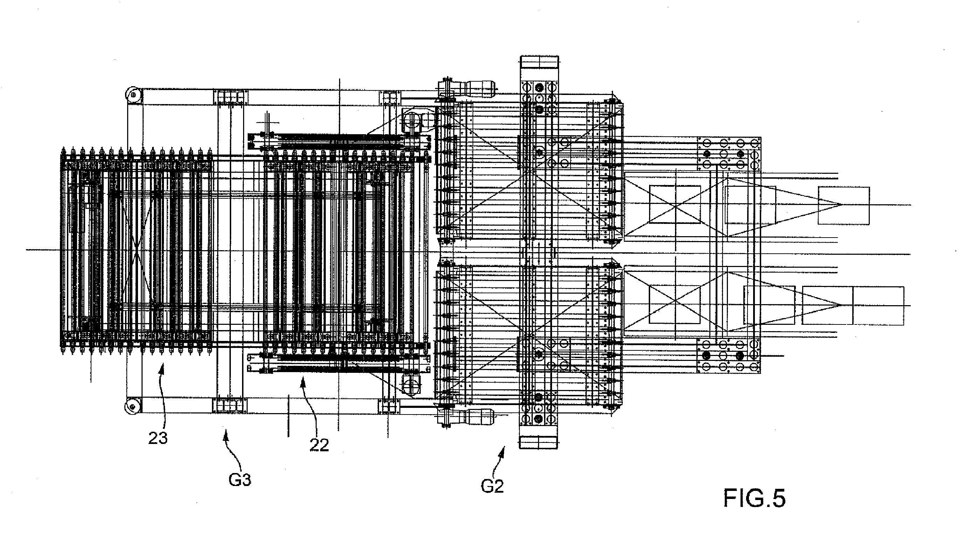

Figure 5 shows a plan view of the forming and loading zone of the palletizer machine in Figure 1.
Figures 6a to 6d show respectively a side view, a front view, a plan view and an enlarged mechanical detail of the programming unit of the loading unit in 4a and 4b.
Figures 7a to 7d show respectively a side view, a front view, a plan view and an enlarged mechanical detail of the loader device of the loading unit in Figures 4a and 4b.
Figures 8a, 8b and 8c show the sequence of cycle steps of a pick-up head according to the present invention, respectively in a side view, a front view and a top view.
Figure 9 shows the sequence of steps according to the present invention for forming the pack layers and palletizing the formed layers.

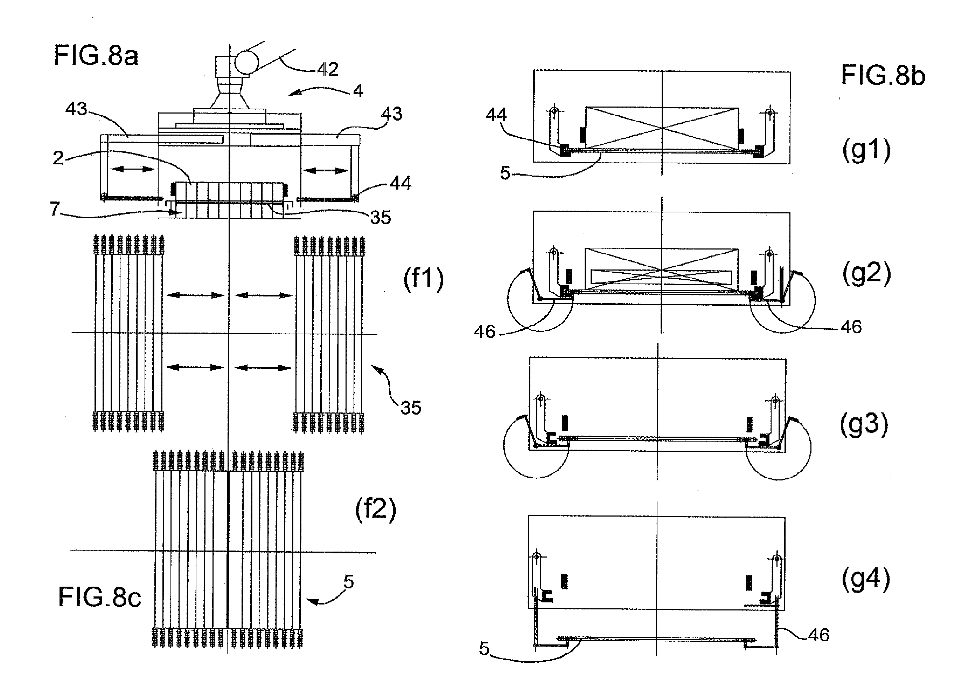

With reference to the accompanying figures, a palletizer machine according to the present invention comprises:
a transfer unit G1 for transferring the single packs 1 arriving from an infeed line 3 to a first operating position P1,
a forming unit G2 for feeding the packs 1 forward from position P1 to a predefined loading position P2 for forming layers 2 of packs 1 on a loading platform 5,
a loading unit G3 for transferring the formed layers 2 to a pick-up station 6, and
a pick-up head 4 for picking up the layers 2 from the release station 6 and forming a palletized load 7 of layers 2 one on top of the other (Fig. 8).

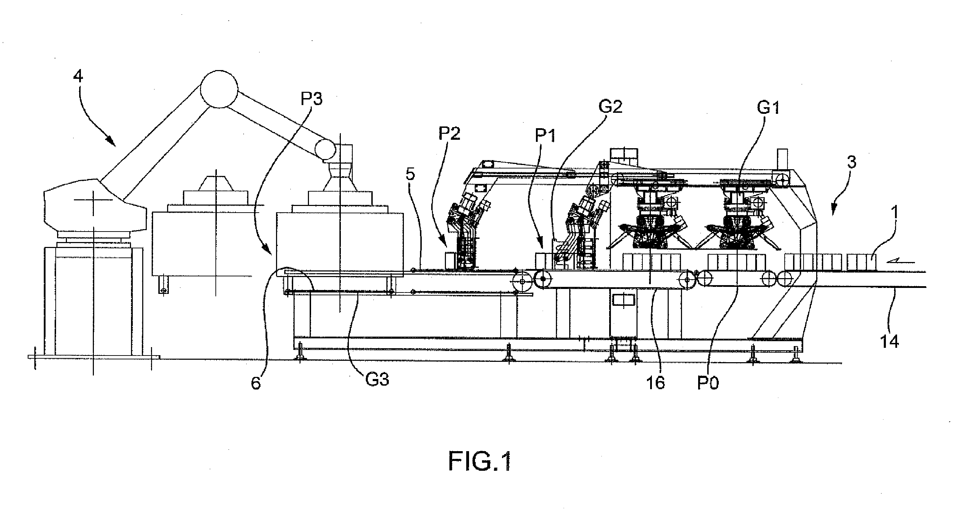

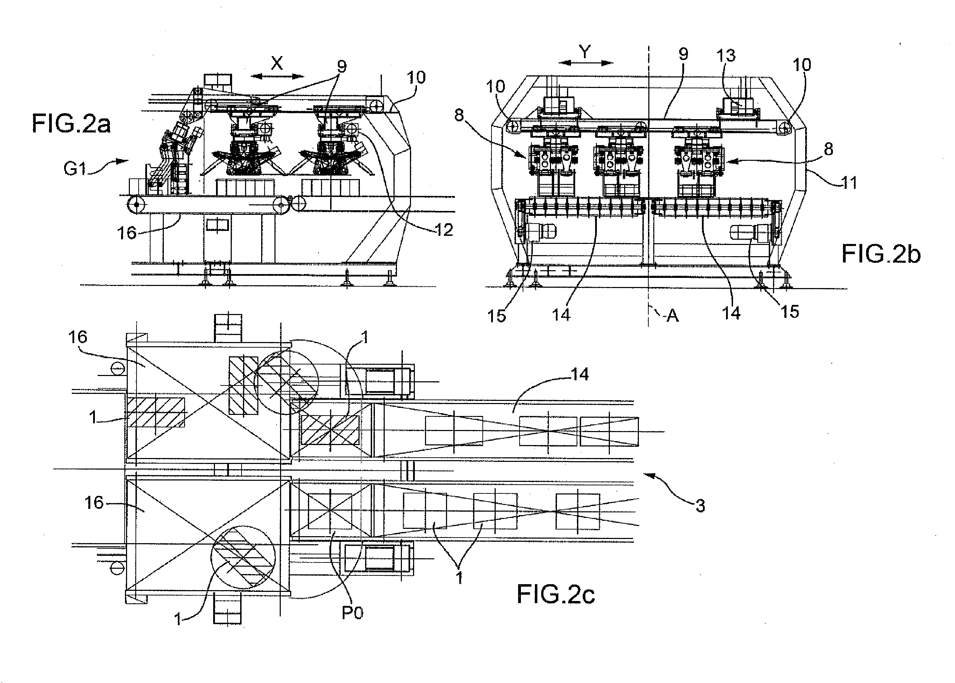

Figures 1, 2a and 2c show a transfer unit G1 comprising two gripper arms 8 supported by a frame 11 preferably of the gantry type and equipped with a cross-type movement in the longitudinal direction X and the crossways direction Y.

In particular, the arms 8 are mounted on their respective cross-beams 9 so that they can run in the crossways direction Y driven by suitable motor units 12 and where the cross-beams 9 in turn travel in the direction X being mounted on longitudinal guides 10 of the frame 11 driven by second motor units 13.

In the embodiment described, the packs are fed from an infeed line 3 comprising two belts 14 driven by motor units 15 and fitted with a dosing device which separates the packs 1 as they arrive and positions them at a fixed point P0 ready to be picked up by the arms 8.

The arms 8 at the fixed point P0 receive the stopped packs (individually or in pairs) and transports them in one or both of the directions X and Y (and rotates them where required) until they are carried onto a conveyor belt 16 which then carries the packs without sliding into the position P1.

In the preferred embodiment, the pick-up and release of the packs on the transfer unit G1 is performed by grippers 81, with a pneumatically controlled opening and closing movement which does not raise the packs.

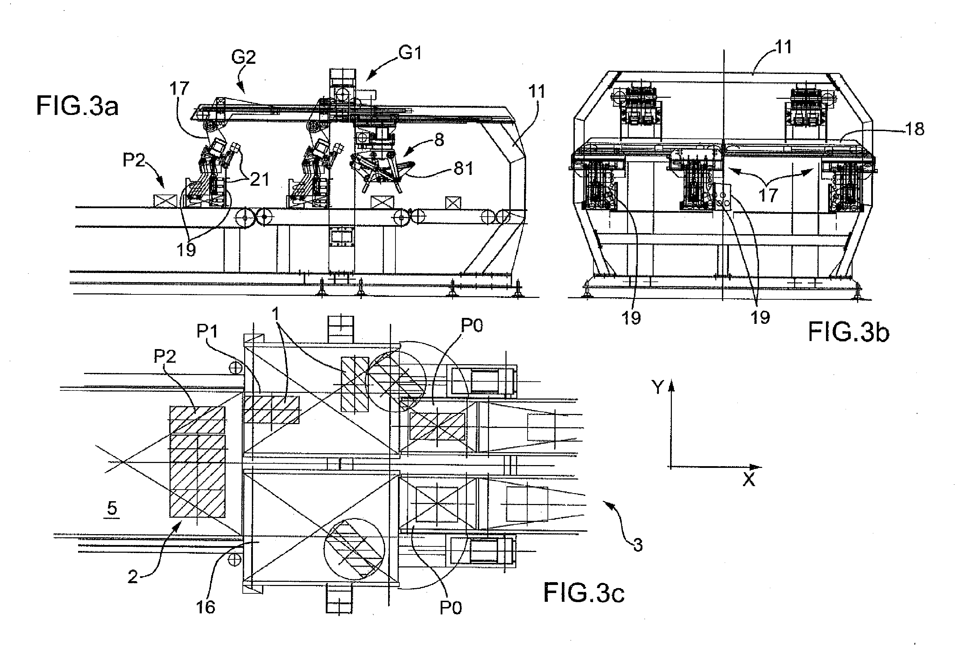

Figures 3a, 3b and 3c show a forming unit G2 comprising one or more arms 17 mounted on their respective cross-beams 18 of the frame 11 to enable travel, in the crossways direction Y, of the cross-beams 18 which in turn travel in the direction X being mounted on the longitudinal guides 20 of the frame 11.

The arms 17 are fitted with pusher plates 19 which make contact with the sides of the packs 1 and push them from position P1 to the final position P2 in the layer of packs 2 being formed on the loading platform 5.

In a preferred embodiment, the plates 19 are mobile and are moved in a horizontal direction by actuators 21 and are independent of each other so that they can adapt to the shape of the packs to be transferred.

During operation, the packs 1 are transferred by traversing them in one or both of the directions X, Y until they occupy position P2 which corresponds to the palletizing configuration required.

Advantageously, the absence of any gripper action holding the packs 1 enables the pusher arms 17 to return immediately to the pick-up position and therefore also reduces the operating time required.

Furthermore, with this solution the packs which have to be transferred onto the platform 5 are moved close to each other during the transfer by a composer unit thereby eliminating the need for side aligners which could otherwise cause jamming.

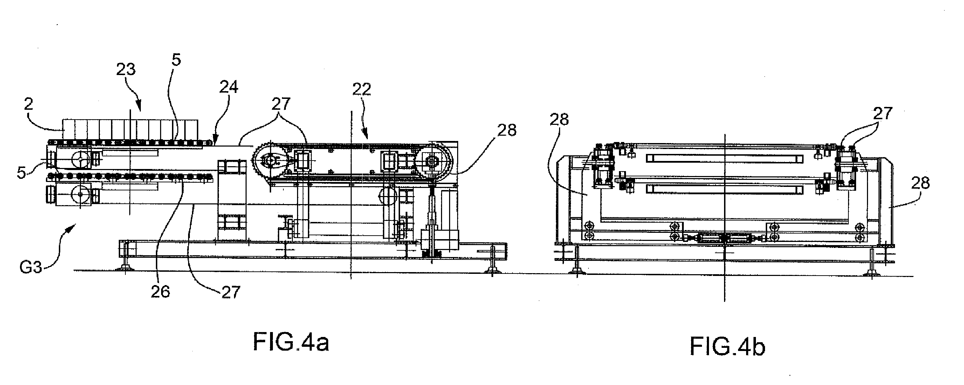

Figures 4a and 4b shown a loading unit G3 according to the present invention for transferring the formed layers 2 to the release station 6.

The loading unit G3 is designed to enable direct palletizing of the layers formed on the platform 5, without the need for intermediate steps or transfers.

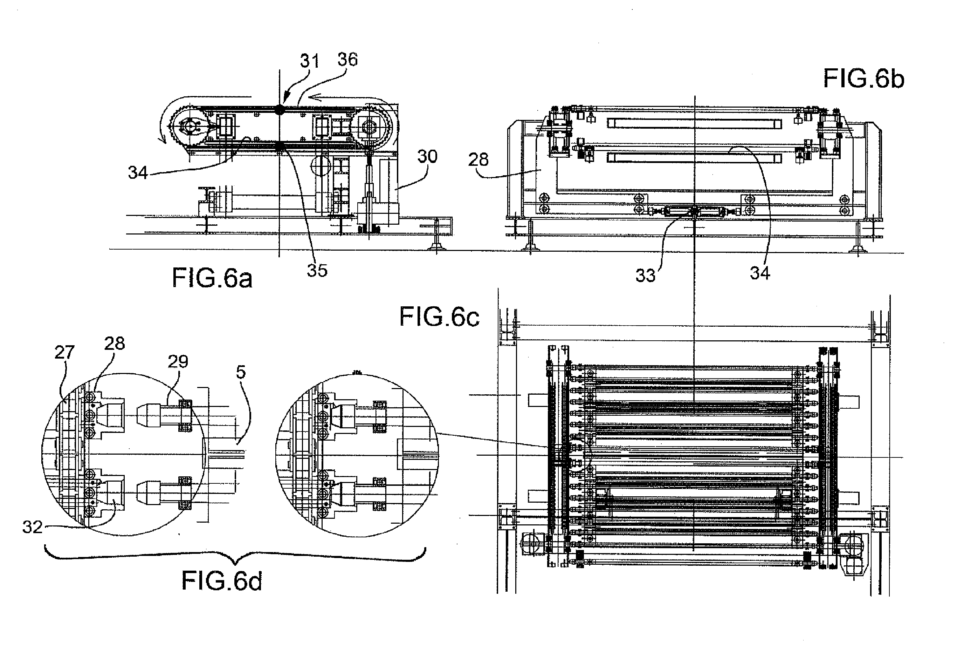

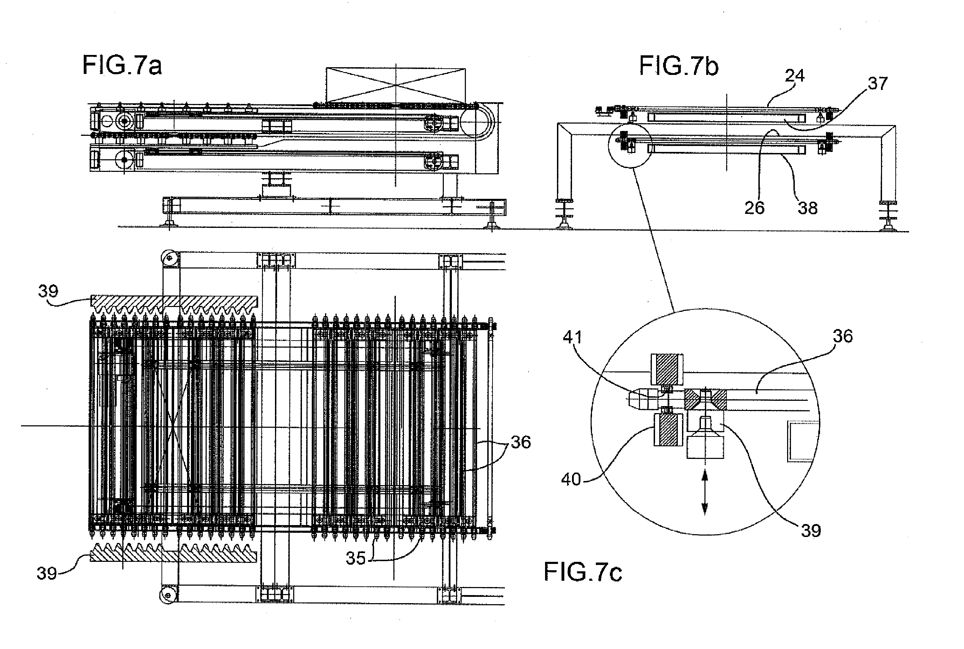

For this purpose, the loading unit G3, in the preferred embodiment described, comprises a programming unit 22 (shown in greater detail in Figures 6a to 6d) and a loading unit 23 (Fig. 7a to 7d) which act together to move the platform 5 from the layer forming position P2 to the formed layer release position P3.

In particular, the units 22 and 23 comprise a recirculating chain which at the top enables the passage of the loaded platform 5 and at the bottom enables the return to the position P2 of the unloaded platform ready for the forming of the new layer.

In more detail, the loading unit G3 comprises three platforms 5, an unloaded platform used for feed purposes, a platform used for layer forming and a platform loaded with the already formed layer 2, where each platform comprises a pair of platform halves or flexible slats 35 comprising an arrangement of jointed, crossways rods.

During operation, the programming unit 22 engages the side of the platform 5, present on the lower surface 34, which must be loaded from the forming units G2, and then from the lower hooking point 35 feeds it forwards and upwards to the release point 31 on the upper surface 36 (Fig. 6a).

During this movement of the platform caused by the programming unit 22, the next rows of the layer 2 are formed. When the layer 2 is complete, the position of the last row in the completed layer is in the release position 31.

During this step, the loading unit 23 receives the platform 5 on the upper traversing surface 24, while the programmer hooking means detach from the platform 5 and move onto the lower hooking surface to hook the unloaded platform 5 or to wait for the arrival of an unloaded platform 5.

In a preferred embodiment, the programming unit 22 comprises two side drive chains 27 whose trajectory corresponds to the path followed by the platform 5 and where the hooking and unhooking movement is obtained by a control 33 controlling the sideways movement of the bands 28 which contain the chains 27 so that as the chains move away from the sides or move towards the sides they respectively disengage and engage the hook seats 32 of the corresponding pins 29 of the platforms 5 (Figures 6c to 6d).

Advantageously, the chain drives 30 are brushless motors synchronised with the operation of the forming units G2.

Figures 7a to 7d show the unit 23 of the loading unit G3 comprising two traversing surfaces, an upper surface 24 and a lower surface 26, along which drive carriages 37, 38 travel and which are fitted with retractable cones 39 which can engage with the rods 36 of the platforms 5 during traversing (Fig. 7d).

The upper surface 24 of the loader extends from the programmer release point 31 to the pick-up point P3 from which the loaded platforms 5 are moved for palletizing. In one embodiment of the present invention, there are at least three platforms 5.

During the operating cycle, the unloaded platforms are fed to the lower surface 26 by the palletizing robot.

On the lower surface 26 a centring device 39 correctly positions the platform which is then hooked by the cones 39 of the lower carriage 38 and carried to the hooking point 35 of the programming unit 22 where it is received by the chains 27.

Before the chains 27 convey the platform 5 along the path already described, the cones 39 travel downwards and the lower carriage 38 returns to wait for a new unloaded platform.

The upper surface 24 is in turn provided with a carriage 37 similar to carriage 38 and is fitted with cones 39 which convey the platform from the release point 31 to the pick-up point P3 from where, once the layer 2 and the platform 5 have been delivered to the palletizing robot, the carriage 37 can return to the release point for a new cycle.

In a preferred embodiment, the platforms 5 are guided at the sides by linear cams 40 which engage with the bearings 41 mounted on the rods 36 in order to limit friction under load.

Figures 8a, 8b and 8c, show the operation of the pick-up head 4 according to the present invention when manoeuvred by the palletizing robot 42.

The head 4 is fitted with a pair of sliding side frames 43 fitted in turn with hooking points 44 engaging with the rods 36 of the half-platforms or slats 35.

The frames 43 are mobile and move away from and towards each other (fig. 8c) to open the pair of slats 35 and release the layer 2 onto the palletized load 7 underneath and perform an opening cycle to unload (f1) and a closing cycle (f2) to prepare for a new load.

Figure 8b shows the succession of movements of the hooking points 44 which, starting from the loading step (g1) and once the layer 2 loading has been completed (g2), open to disengage the platform 5 which is then engaged by the mechanism 46 (g3) to be carried to the lower level (g4) at the point where the platform 5 is returned to the lower surface 26 of the loader 23.

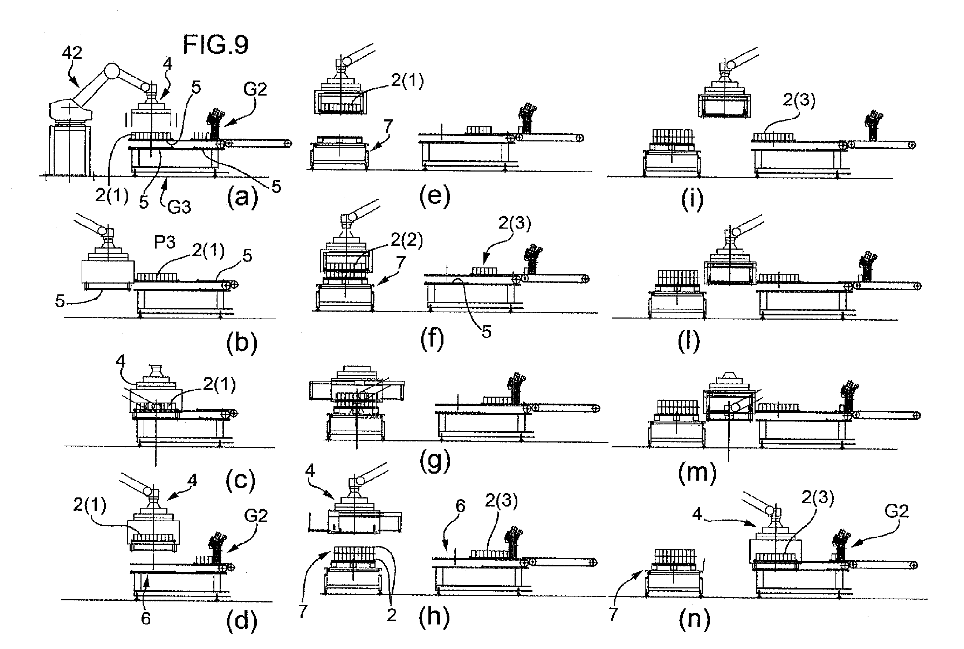

The steps of the operating cycle are clearly shown in Figure 9. The figure shows the various operating cycle steps (a to n) of the palletizing equipment.

Figure 9(a) shows the entire palletizing zone in a standard operating condition.

There is a platform 5 complete with a formed layer 2(1) of product. The head 4 is above the layer while a second platform is delivering to the programming unit 22 which is synchronized with the forming unit G2 which forms the rows for the new layer. A third platform 5 has just been returned by the head 4 to the lower level 26 of the loading unit G3.

### Figure 9(b)

The layer 2(1) is at the pick-up point. The platform on the pallet is on the approaching pick-up head 4 and the programmer starts to feed the platform forward for the loading of a new layer.

### Figure 9(c)

The head returns the empty platform and picks up the second layer 2(2).

### Figure 9(d)

The head 4 starts the transfer movement towards the pallet (not shown), the forming unit G2 starts to form the rows of a layer 2.

### Figure 9(e)

The layer 2(1) is loaded onto the pallet, the unloaded platform 5 waits at the lower return point.

### Figures 9(f) and 9(g)

The head unloads the second layer onto the pallet while the third layer 2(3) is being formed and a platform is positioned and centred on the lower return point.

### Figures 9(h) and 9(i)

The head has deposited the second layer 2(2) and starts to pick up the third layer 2(3) which has been completed and transferred by the loader from the programmer release point to the pick-up point.

### Figures 9(1) and 9(n)

The head 4 returns the empty platform and picks up the third layer 2(3) while the forming unit forms the fourth layer.

The invention described above has a series of major advantages.

One advantage consists of the idea of forming the layers and transferring the packs in the static mode without impacting the packs with deviators or similar devices. This limits any possible damage.

In particular, the packs are picked up in the positive mode by the grippers and placed in the active mode to form the layers of the pallet being formed.

A further advantageous aspect of the invention consists in its positioning accuracy and in the fact that corrective actions such as aligning are not required.

A further advantageous aspect consists in the possibility of being able to synchronise and control with precision the various steps in the cycle for transferring the single packs and thereby achieve high levels of productivity and flexibility.

Clearly, the present invention is not limited to the embodiments illustrated and described herein and is susceptible to numerous modifications and variants without thereby departing from the scope of the inventive concept as described, illustrated and disclosed herein.

## Claims

1. A palletizer machine for layers (2), one on top of the other, of packs (1) fed from a infeed transfer line (3), comprising:
a transfer unit (G1) for transferring and orienting packs (1) arriving from an infeed line (3) to a first static operating position (P1),
a forming unit (G2) for feeding single packs (1) from the position (P1) to a predefined position (P2) for forming layers (2) of packs (1) on a loading platform (5),
a loading unit (G3) for transferring a formed layer (2) onto a load platform (5) and to a pick-up station (6),
means (4) for picking up the layer (2) from the pick-up station (6) and forming a palletized load (7) of layers (2) one on top of the other.

2. The palletizer machine according to claim 1 wherein the transfer unit (G1) comprises at least one gripper arm (8) supported by a frame (11) and equipped with a cross-type movement in the longitudinal direction X and the crossways direction Y and a rotary movement.

3. The palletizer machine according to claim 2 wherein the pick-up and release of packs in the transfer unit (G1) is performed by grippers (81) without raising of the packs.

4. The palletizer machine according to claim 3 wherein the grippers (81) act sideways on the two adjacent sides of the packs.

5. The palletizer machine according to one of the foregoing claims wherein the forming unit (G2) comprises one or more transfer arms (17) mounted on their respective cross-beams (18) of the frame (11) in order to enable travel, in a crossways direction Y, of the cross-beams (18) which in turn travel in the direction (X) being mounted on the longitudinal guides (20) of the frame (11).

6. The palletizer machine according to claim 5 wherein the arms (17) are fitted with pusher plates (19) which make contact with the sides of the packs (1) and push them from position P1 to the final position P2 in the layer of packs (2) being formed on the loading platform (5).

7. The palletizer machine according to claim 6 wherein the plates (19) are mobile and moved by actuators (21) and are independent of each other.

8. The palletizer machine according to one of the foregoing claims wherein the loading unit (G3) comprises a programming unit (22) synchronized with the forming unit (G2) to form on empty platforms (5) successive rows of layers (2) of packs and a loading unit (23) which moves the loaded platforms (5) from the release point (31) of the programming unit to the pick-up position P3 of the formed layer and moves the empty platforms (5) from a return point to a hooking point (35) of the programming unit (22).

9. The palletizer machine according to claim 8 wherein the programming unit (22) comprises two side chains (27) for driving the platforms (5) provided with a sideways movement for hooking/unhooking the platforms (5).

10. The palletizer machine according to claim 8 or 9 wherein the loader unit (23) of the unit (G3) comprises means for driving the platforms (5) along two traversing surfaces, an upper surface (24) for driving the loaded platforms (5) towards the pick-up point P3, and a lower surface (26) for returning the empty platforms towards the forming point P2.

11. The palletizer machine according to one of the claims from 8 to 10 wherein the loader unit comprises a centring device (39) for correctly positioning the empty platforms (5) returned to the surface (26).

12. The palletizer machine according to one of the claims from 8 to 11 wherein the drive means of the loader unit comprise at least one carriage (37, 38) fitted with engaging/disengaging means (39) for engaging and disengaging the platforms (5).

13. The palletizer machine according to claim 12 wherein the means for engaging/disengaging the platforms (5) comprise at least one carriage (37, 38) fitted with cones (39) with a movement controlled to engage and disengage the platforms (5).

14. The palletizer machine according to one of the claims from 8 to 13 wherein the loading unit (G3) comprises at least three platforms (5).

15. The palletizer machine according to any one of the foregoing claims wherein the pick-up means comprise a pick-up head (4) fitted with a pair of side frames (43) equipped with hooking points (44) for the platform halves or slats (35) forming the platform (5) where the frames are mobile and move away from and towards each other to open and close the pair of slats (35) in the steps for unloading and loading the layers (2).

16. The palletizer machine according to an one of the foregoing claims wherein the means (4) for picking up the layer (2) comprise means for releasing the pair of slats (35) on the layer forming position (P2).

17. A method of palletizing layers (2), one on top of the other, of packs (1) fed from a infeed transfer line (3) comprising the following cycle steps:
transfer and orientation of individual packs (1) arriving from the infeed line (3) and a first static operating position (P1),
pick up of individual packs (1) from their stopped position (P1) and release of the same to a predefined loading position (P2) for forming pack layers (2),
transfer of the layers (2) to a pick-up station (6),
forming of a palletized load (7) of layers (2) one on top of the other.

18. The method according to claim 17 wherein the transfer step does not involve any raising of the packs.

19. The method according to one of the claims from 16 to 18 wherein the step for forming the palletized load (7) takes place by dropping when the side slats open.
